# EUROPEAN PATENT APPLICATION

(11) **EP 1 983 321 A2**
(43) Date of publication of application: **22.10.2008**
(21) Application number: 08154503.0
(22) Date of filing: 15.04.2008
(51) Int. Cl.: G01L 5/10, G01L 1/14

(54) **Tension measuring apparatus**

(30) Priority: 18.04.2007 JP 2007109797
(71) Applicant: Nitta Corporation, Osaka-shi, Osaka 556-0022 (JP)
(72) Inventor: Morimoto, Hideo c/o Nara Factory of NITTA CORPORATION, Yamatokoriyama-shi, Nara 639-1085 (JP)
(74) Representative: Joly, Jean-Jacques

(57) **Abstract**

In a tension measuring apparatus, two fixed electrodes (11, 12) are distantly arranged on a single plane, and a movable electrode (32) is disposed parallel to the fixed electrodes to face the fixed electrodes. When a fiber (A) is pressed onto a force receiving portion (70), the movable electrode (32) is rotated around a rotational axis (33P). This changes the distances of the movable electrode (32) from the fixed electrodes (11, 12). The force received by the force receiving portion (70) from the fiber (A) is measured based on changes in the capacitance values of the capacitance elements constituted by the movable electrode (32) and the respective fixed electrodes (11, 12).

## Description

### BACKGROUND OF THE INVENTION

### 1. Field of the Invention

The present invention relates to a tension measuring apparatus for measuring the magnitude of a force externally applied.

### 2. Description of Related Art

A force measuring apparatus is known for measuring the tension of a string or a wire. For example, Japanese Patent Unexamined Publication No. 2002-90239 discloses a tension detecting apparatus. In this apparatus, two distant points of a wire are hooked on attachment portions of the apparatus. The wire is hitched to a bent portion of the apparatus disposed between the two points of the wire. The bent portion perpendicularly protrudes beyond a straight line extending through the two points of the wire. In this state, the force applied to the bent portion is measured with a strain gauge to measure the tension of the wire.

In the process of making a thread, a number of fibers must be bundled with keeping the tensions of the fibers uniform so that unevenness is not generated on the resulting thread. For this purpose, it is required to measure the tension of each fiber. However, when the tension detecting apparatus disclosed in the above publication is used for measuring the tension of each fiber, the apparatus may excessively respond also to vibration of the device on which the apparatus is disposed, or vibration of the fiber caused by knurls of the natural fiber hitting the bent portion of the apparatus. This is because the tension detecting apparatus using a strain gauge has high sensitivity to vibrations at 1 kHz or more. There is a possibility that the magnitude of the tension cannot be accurately measured. In addition, when a number of fibers are bundled, the fibers are disposed at narrow intervals. Therefore, such a tension detecting apparatus provided for each fiber must be thin.

### SUMMARY OF THE INVENTION

An object of the present invention is to provide a thin tension measuring apparatus that can accurately measure the magnitude of a tension.

According to a first aspect of the present invention, a tension measuring apparatus comprises a plurality of fixed electrodes arranged in one direction on one plane so as to be distant from each other; and a movable electrode that cooperates with the plurality of fixed electrodes to form capacitance elements. The movable electrode is displaceable in at least one of the direction of getting near to the plane and the direction of getting away from the plane. The apparatus further comprises a force receiving portion that receives an externally applied force and thereby displaces the movable electrode so as to change the distances of the movable electrode from the respective fixed electrodes constituting the capacitance elements. The magnitude of the force applied to the force receiving portion is measured on the basis of changes in the capacitance values of the capacitance elements.

According to the above feature of the present invention, the force externally applied to the force receiving portion changes the distances of the movable electrode from the respective fixed electrodes. Thus, the magnitude of the force applied to the force receiving portion can be measured on the basis of changes in the capacitance values of the capacitance elements constituted by the movable electrode and the respective fixed electrodes. As described above, when the tension of a fiber or the like is measured, a too highly vibration sensitive tension measuring apparatus may also respond to vibration of a device on which the tension measuring apparatus is attached, or vibration of the fiber due to knurls of the natural fiber. There is a possibility that the magnitude of the tension cannot be accurately measured. In the present invention, however, the magnitude of the tension is measured on the basis of changes in the capacitance values caused by displacement of the movable electrode. Thus, the sensitivity to vibrations of the apparatus is not so high, and the apparatus hardly responds to the above-described vibrations. Therefore, the magnitude of the tension can accurately be measured. In addition, the tension measuring apparatus according to the present invention has a simple construction in which a force is detected on the basis of changes in the distances between the fixed electrodes and the movable electrode opposed to the fixed electrodes. This can provide a thin tension measuring apparatus hard to break and low in cost.

In the tension measuring apparatus of the present invention, it is preferable that the apparatus comprises two fixed electrodes, and the force applied to the force receiving portion causes an increase in the capacitance value of one of two capacitance elements constituted by the two fixed electrodes and the movable electrode, and a decrease in the capacitance value of the other capacitance element.

According to the above feature of the present invention, the force applied to the force receiving portion can be more accurately measured on the basis of the quantities of the increase and decrease in the capacitance values constituted by the movable electrode and the two fixed electrodes.

In the tension measuring apparatus of the present invention, it is preferable that the force receiving portion is disposed outside the two fixed electrodes in the one direction, and the movable electrode is rotatable around a rotational axis extending parallel to the plane at a position corresponding to a position between the two fixed electrodes.

According to the above feature of the present invention, it is easy to realize a construction for increasing the capacitance value of one of the two capacitance elements constituted by the two fixed electrodes and the movable electrode and decreasing the capacitance value of the other capacitance element.

In the tension measuring apparatus of the present invention, it is preferable that the apparatus comprises two fixed electrodes, the force receiving portion is disposed outside the two fixed electrodes in the one direction, and the movable electrode is displaceable with its one end serving as a fulcrum in only one of the direction of getting near to the plane and the direction of getting away from the plane.

According to the above feature of the present invention, the movable electrode moves in the same direction with respect to the two fixed electrodes. This increases or decreases either of the capacitance values of the two capacitance elements constituted by the two fixed electrodes and the movable electrode. This brings about substantially the same temperature characteristics of the two capacitance elements. This improves the temperature characteristics of the output of the tension measuring apparatus on the basis of the capacitance values of the two capacitance elements. More specifically, for example, even when the movable electrode is displaced by thermal expansion under an influence of temperature, a change in the output is relatively small corresponding to the difference between the capacitance values of the two capacitance elements. Thus, because a change in the no-load output, that is, offset, of the tension measuring apparatus decreases, the measurement error decreases. In addition, because the displacement of the movable electrode is restricted to one direction, useless displacement, that is, variation in capacitance values, due to a change in temperature is hard to occur. Thus, a tension measuring apparatus having good temperature characteristics can be provided.

According to a second aspect of the present invention, a tension measuring apparatus comprises a plurality of first fixed electrodes arranged in one direction on a first plane so as to be distant from each other; a plurality of second fixed electrodes arranged in the one direction on a second plane facing the first plane so as to be distant from each other; and a movable electrode that cooperates with the plurality of first fixed electrodes and the plurality of second fixed electrodes to form capacitance elements. The movable electrode is displaceable in at least one of the direction of getting near to the first plane and the direction of getting away from the first plane. The apparatus further comprises a force receiving portion that receives an externally applied force and thereby displaces the movable electrode so as to change the distances of the movable electrode from the respective first and second fixed electrodes constituting the capacitance elements. The magnitude of the force applied to the force receiving portion is measured on the basis of changes in the capacitance values of the capacitance elements.

According to the above feature of the present invention, the force externally applied to the force receiving portion changes the distances of the movable electrode from the respective fixed electrodes. Thus, the magnitude of the force applied to the force receiving portion can be measured on the basis of changes in the capacitance values of the capacitance elements constituted by the movable electrode and the respective fixed electrodes. As described above, when the tension of a fiber or the like is measured, a too highly vibration sensitive tension measuring apparatus may also respond to vibration of a device on which the tension measuring apparatus is attached, or vibration of the fiber due to knurls of the natural fiber. There is a possibility that the magnitude of the tension cannot be accurately measured. In the present invention, however, the magnitude of the tension is measured on the basis of changes in the capacitance values caused by displacement of the movable electrode. Thus, the sensitivity to vibrations of the apparatus is not so high, and the apparatus hardly responds to the above-described vibrations. Therefore, the magnitude of the tension can be accurately measured. In addition, the tension measuring apparatus according to the present invention has a simple construction in which a force is detected on the basis of changes in the distances between the fixed electrodes and the movable electrode opposed to the fixed electrodes. This can provide a thin tension measuring apparatus hard to break and low in cost. Further, when the first and second fixed electrodes are disposed on the respective sides of the movable electrode, there is a change in the capacitance values change of the capacitance elements constituted by the movable electrode and the respective fixed electrodes. This increases the changes in the capacitance values of the whole tension measuring apparatus, and thus improves the measuring sensitivity of the tension measuring apparatus.

In the tension measuring apparatus of the present invention, it is preferable that the apparatus comprises two first fixed electrodes and two second fixed electrodes facing the respective first fixed electrodes, and the force applied to the force receiving portion causes : an increase in the capacitance value of one of two capacitance elements constituted by the two first fixed electrodes and the movable electrode, and a decrease in the capacitance value of the other capacitance element; and an increase in the capacitance value of one of two capacitance elements constituted by the two second fixed electrodes and the movable electrode, and a decrease in the capacitance value of the other capacitance element.

According to the above feature of the present invention, the force applied to the force receiving portion can be more accurately measured on the basis of the quantities of the increase and decrease in the capacitance values constituted by the movable electrode and the two first fixed electrodes and by the movable electrode and the two second fixed electrodes.

In the tension measuring apparatus of the present invention, it is preferable that the force receiving portion is disposed outside the two first fixed electrodes in the one direction, and the movable electrode is rotatable around a rotational axis extending parallel to the first plane at a position corresponding to a position between the two first fixed electrodes and at a position corresponding to a position between the two second fixed electrodes.

According to the above feature of the present invention, it is easy to realize a construction for increasing the capacitance value of one of two capacitance elements constituted by the two first fixed electrodes and the movable electrode and decreasing the capacitance value of the other capacitance element, and for increasing the capacitance value of one of two capacitance elements constituted by the two second fixed electrodes and the movable electrode and decreasing the capacitance value of the other capacitance element.

### BRIEF DESCRIPTION OF THE DRAWINGS

Other and further objects, features and advantages of the invention will appear more fully from the following description taken in connection with the accompanying drawings in which:
FIG. 1 is a schematic view of a thread making machine including tension measuring apparatuses according to a first embodiment of the present invention;
FIG. 2 is a side view of a tension measuring apparatus viewed from the direction of an arrow II in FIG. 1;
FIGS. 3A to 3F show components of the tension measuring apparatus of FIG. 2;
FIG. 4 shows the tension measuring apparatus of FIG. 2 to which a tension is being applied;
FIG. 5 shows a circuit construction of the tension measuring apparatus of FIG. 2;
FIG. 6 is a block circuit diagram of a tension calculating circuit;
FIG. 7 is a sectional view of a tension measuring apparatus according to a second embodiment of the present invention;
FIG. 8 is a block circuit diagram of a tension calculating circuit of the tension measuring apparatus of FIG. 7;
FIG. 9 is a sectional view of a tension measuring apparatus according to a third embodiment of the present invention; and
FIG. 10 is a plan view of a plate member included in the tension measuring apparatus of FIG. 9.

### DESCRIPTION OF THE PREFERRED EMBODIMENTS

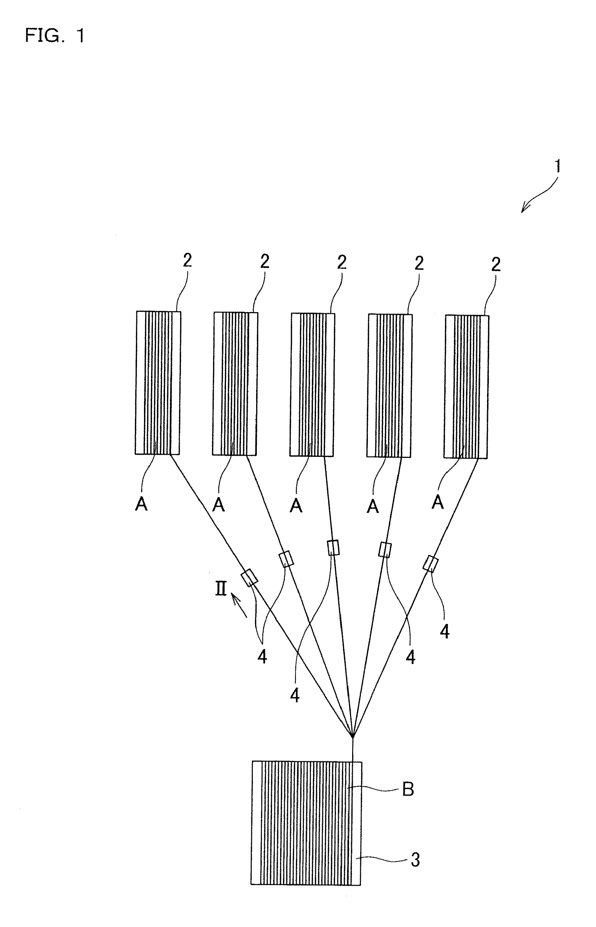

Hereinafter, preferred embodiments of the present invention will be described with reference to the accompanying drawings. FIG. 1 is a schematic view of a thread making machine including tension measuring apparatuses according to a first embodiment of the present invention.

As shown in FIG. 1, the thread making machine 1 includes a number of bobbins 2, a bobbin 3, and a number of tension measuring apparatuses 4. A fiber A is wound on each bobbin 2. The tension measuring apparatuses 4 are provided so as to correspond to the respective bobbins 2 to measure the magnitudes of the tensions of the fibers A drawn out from the respective bobbins 2.

In the thread making machine 1, the fibers A are drawn out from the respective bobbins 2 so as to uniformize the tensions measured by the tension measuring apparatuses 4. The drawn-out fibers A are bundled to make a thread B. The made thread B is wound on the bobbin 3. Afterward, the thread B wound on the bobbin 3 is processed by twisting and so on.

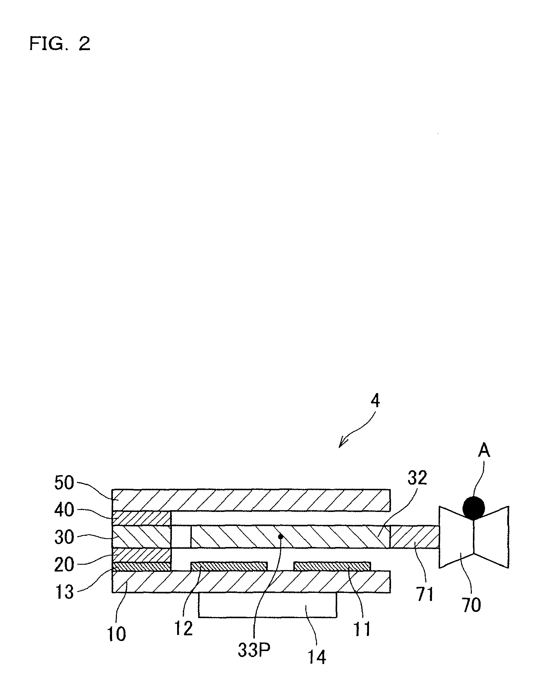

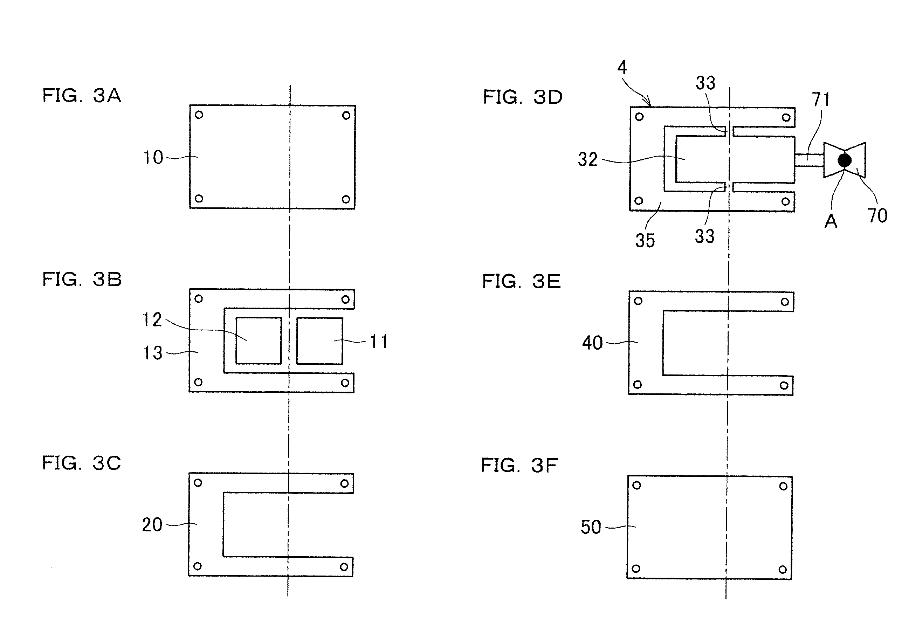

Next, a tension measuring apparatus 4 will be described. FIG. 2 is a side view of a tension measuring apparatus in FIG. 1 when viewed from the direction of an arrow II. FIGS. 3A to 3F show components of the tension measuring apparatus 4 of FIG. 2.

As shown in FIGS. 2 and 3A to 3F, a tension measuring apparatus 4 includes a substrate 10, two fixed electrodes 11 and 12, an electrode 13, a spacer 20, a plate member 30, a spacer 40, a cover layer 50, and a force receiving portion 70.

As shown in FIG. 3A, the substrate 10 is substantially rectangular. The fixed electrodes 11 and 12 and the electrodes 13 are disposed on one face of the substrate 10. Circuit components 14 are disposed on the other face of the substrate 10 for detecting a force applied to the tension measuring apparatus 4.

As shown in FIG. 3B, the fixed electrodes 11 and 12 are formed into substantially the same rectangular shape substantially equal in size. The fixed electrodes 11 and 12 are arranged at a horizontal interval, that is, at an interval in one direction in FIG. 2. Each of the fixed electrodes 11 and 12 is covered with a not-shown thin insulating film.

As shown in FIG. 3B, the electrode 13 is substantially U-shaped. The electrode 13 is not covered with an insulating film, and is electrically connected to the plate member 30 through the spacer 20 disposed on the electrode 13.

As shown in FIG. 3C, the spacer 20 is substantially U-shaped, which is substantially equal in size to the electrode 13. The spacer 20 is made of a conductive material such as metal.

As shown in FIG. 3D, the plate member 30 is made up of a fixed portion 31, a movable electrode 32, and interconnecting portions 33. The fixed portion 31 is substantially U-shaped, inside which there is disposed the movable electrode 32 connected through the interconnecting portions 33. The movable electrode 32 is disposed parallel to the fixed electrodes 11 and 12 so as to be opposed to the electrodes 11 and 12. One horizontal end of the movable electrode 32 in FIG. 2 is connected to the force receiving portion 70 through a connecting portion 71. The force receiving portion 70 is disposed on the right side of the fixed electrode 11, that is, outside the fixed electrode 11 in one direction, of the fixed electrodes 11 and 12 arranged horizontally in FIG. 2. When measuring the tension of a fiber A, the fiber A is pressed onto the force receiving portion 70 so that a force perpendicular to the substrate 10 is applied to the force receiving portion 70.

When the force receiving portion 70 receives a force, the movable electrode 32 is rotated around the interconnecting portions 33. That is, the movable electrode 32 is rotatable around a rotational axis 33P extending parallel to the substrate 10 at a position corresponding to a position between two fixed electrodes 11 and 12.

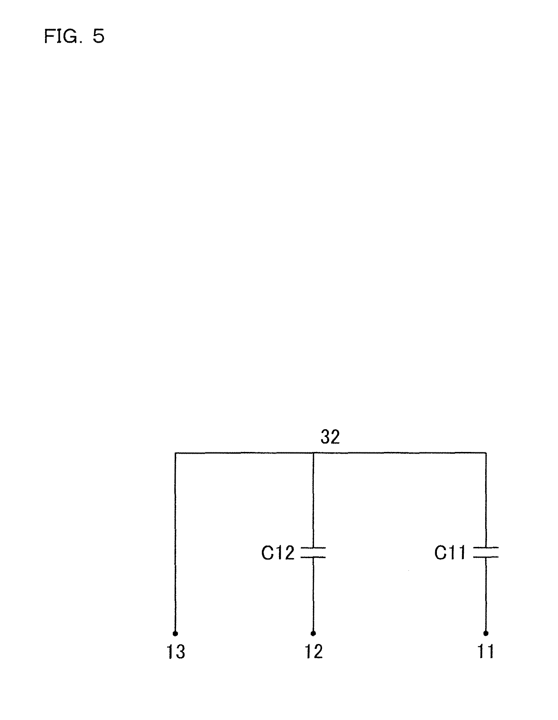

Because the electrode 13, the spacer 20 and the plate member 30 are electrically conductive, the electrode 13 and the movable electrode 32 are electrically connected to each other. The two fixed electrodes 11 and 12 are opposed to the movable electrode 32 to form capacitance elements C11 and C12, as shown in FIG. 5.

As shown in FIG. 3E, the spacer 40 is substantially U-shaped, which is substantially the same as the spacer 20. The spacer 40 is made of a conductive material such as metal.

As shown in FIG. 3F, the cover layer 50 is made of a substantially rectangular plate member of a metal or resin. The cover layer 50 is disposed over the plate member 30 with the spacer 40 being interposed.

In the tension measuring apparatus 4, the substrate 10, the electrode 13, the spacer 20, the plate member 30, the spacer 40, and the cover layer 50 are united into one body with not-shown screws or rivets provided through four circular holes formed in each of those components.

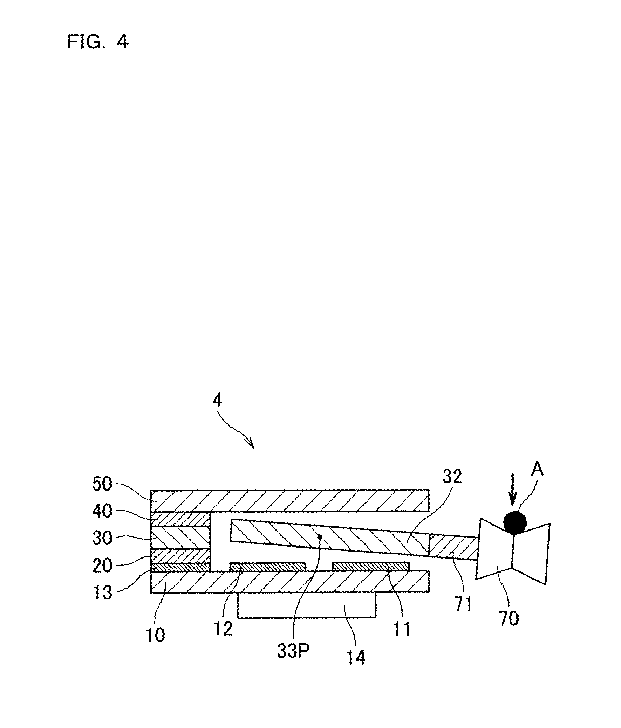

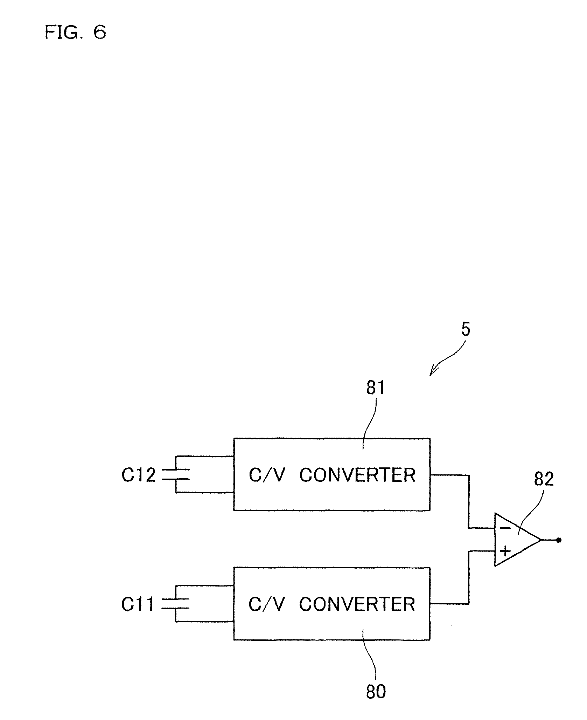

Next will be described a method of calculating the tension T when a fiber A is pressed onto the force receiving portion 70. FIG. 4 shows the tension measuring apparatus 4 of FIG. 2 to which a tension is being applied. FIG. 5 shows a circuit construction of the tension measuring apparatus 4 of FIG. 2. FIG. 6 is a block circuit diagram of a tension calculating circuit.

As shown in FIG. 4, when the fiber A is pressed onto the force receiving portion 70, the force receiving portion 70 receives a downward force from the fiber A. The force causes the movable electrode 32 to rotate around the rotational axis 33P.

At this time, one end, that is, the right end in FIG. 4, of the movable electrode 32 moves to get near to the fixed electrode 11 while the other end, that is, the left end in FIG. 4, of the movable electrode 32 moves to get away from the fixed electrode 12. This decreases the distance between the fixed electrode 11 and the movable electrode 32 while increasing the distance between the fixed electrode 12 and the movable electrode 32.

As shown in FIG. 5, capacitance elements C11 and C12 are formed between the respective fixed electrodes 11 and 12 and the movable electrode 32. The capacitance value of a capacitance element is inversely proportional to the distance between the electrodes. Thus, when the force receiving portion 70 receives a downward force, this increases the capacitance value of the capacitance element C11 while decreasing the capacitance value of the capacitance element C12.

By using the above feature, a tension calculating circuit 5 for calculating a tension is constructed as shown in FIG. 6. The tension calculating circuit 5 includes the capacitance elements C11 and C12, C/V converters 80 and 81, and a subtracter 82. Of the tension calculating circuit 5, the circuit part forming the C/V converters 80 and 81 and the subtracter 82 except the capacitance elements C11 and C12 can be formed into a thickness of about 1 mm. Therefore, provision of the C/V converters 80 and 81 and the subtracter 82 does not bring about an increase in the size of the tension measuring apparatus 4.

In the tension calculating circuit 5, the C/V converter 80 outputs a voltage corresponding to the capacitance value of the capacitance element C11, and the C/V converter 81 outputs a voltage corresponding to the capacitance value of the capacitance element C12. The subtracter 82 outputs a voltage corresponding to the difference between the voltage output from the C/V converter 80 and the voltage output from the C/V converter 81. The capacitance values of the capacitance elements C11 and C12 change in accordance with the magnitude of the force applied to the force receiving portion 70. Therefore, by detecting the voltage output from the subtracter 82, the force received by the force receiving portion 70 from the fiber A can be measured.

As described above, in the tension measuring apparatus 4 of this embodiment, when the force receiving portion 70 receives a force from the fiber A, the movable electrode 32 is rotated around the rotational axis 33P to change the respective distances of the movable electrode 32 from the two fixed electrodes 11 and 12. The force received by the force receiving portion 70 from the fiber A can accurately be measured on the basis of changes in the capacitance values of the capacitance elements C11 and C12 formed between the movable electrode 32 and the respective fixed electrodes 11 and 12.

When a too strong force is applied to the force receiving portion 70, the movable electrode 32 is stopped by the substrate 10 and the cover layer 50 disposed on both sides of the movable electrode 32. The rotation of the movable electrode 32 is thereby limited. Thus, the substrate 10 and the cover layer 50 have functions of preventing too large rotation of the movable electrode 32 that may bring about break of the interconnecting portions 33 due to plastic deformation.

The range of tension measurement can be controlled by the material and thickness of the plate member 30; the width and length of each interconnecting portion 33; the width of the movable electrode 32; the thickness of the spacers 20 and 40; the distance between the interconnecting portions 33 and the point of application of force on the force receiving portion 70; and so on.

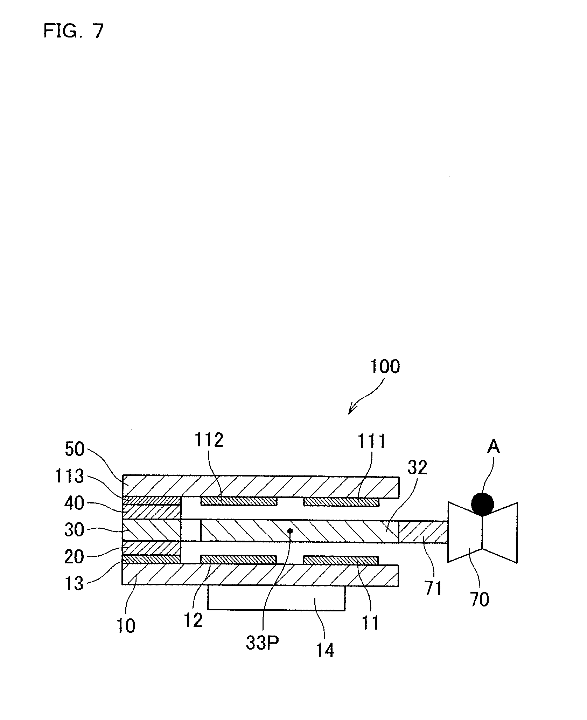

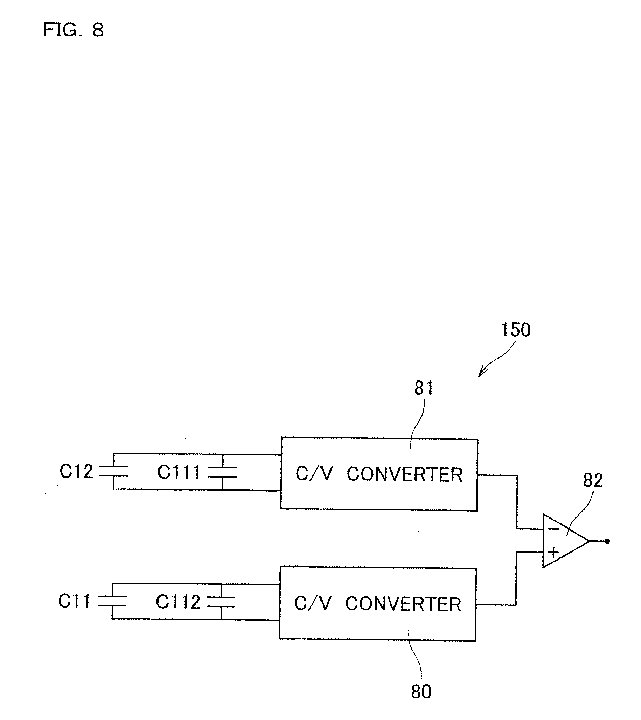

Next, a tension measuring apparatus according to a second embodiment of the present invention will be described with reference to FIGS. 7 and 8. FIG. 7 is a sectional view of a tension measuring apparatus according to the second embodiment of the present invention. FIG. 8 is a block circuit diagram of a tension calculating circuit of the tension measuring apparatus of FIG. 7.

The tension measuring apparatus 100 of this embodiment differs from the tension measuring apparatus 4 of the first embodiment on the following point. While fixed electrodes are disposed only on one side of the movable electrode 32 in the tension measuring apparatus 4, fixed electrodes are disposed on both sides of the movable electrode in the tension measuring apparatus 100. That is, while the fixed electrodes 11 and 12 are disposed on one side of the movable electrode 32 in the tension measuring apparatus 4, fixed electrodes 11 and 12 are disposed on one side of the movable electrode 32 and fixed electrodes 111 and 112 are disposed on the other side of the movable electrode 32 in the tension measuring apparatus 100. The other features of the construction of the tension measuring apparatus 100 are the same as those of the tension measuring apparatus 4. Therefore, the same components of the tension measuring apparatus 100 as those of the tension measuring apparatus 4 are denoted by the same reference numerals as of the tension measuring apparatus 4, respectively, and the description thereof will be omitted.

As shown in FIG. 7, the tension measuring apparatus 100 includes a substrate 10; two fixed electrodes 11 and 12 and an electrode 13; a spacer 20; a plate member 30; a spacer 40; two fixed electrodes 111 and 112 and an electrode 113; a cover layer 50; and a force receiving portion 70. Circuit components 14 are disposed on the other face of the substrate 10.

The fixed electrodes 111 and 112 are disposed on a face of the cover layer 50 so as to be opposed to the respective fixed electrodes 11 and 12. The fixed electrodes 111 and 112 are formed into a substantially rectangular shape substantially equal in size to the fixed electrodes 11 and 12. The fixed electrodes 111 and 112 are arranged at a horizontal interval, that is, at an interval in one direction in FIG. 7. Each of the fixed electrodes 111 and 112 is covered with a not-shown thin insulating film.

The electrode 113 is substantially U-shaped. The electrode 113 is not covered with an insulating film, and is electrically connected to the plate member 30 through the spacer 40 disposed under the electrode 113.

When a fiber A is pressed onto the force receiving portion 70, the force receiving portion 70 receives a downward force from the fiber A, and thereby the movable electrode 32 rotates around the rotational axis 33P. Thus, one end, that is, the right end in FIG. 7, of the movable electrode 32 moves to get near to the fixed electrodes 11 and 112 while the other end, that is, the left end in FIG. 7, of the movable electrode 32 moves to get away from the fixed electrodes 12 and 111. This decreases the distances of the movable electrode 32 from the fixed electrodes 11 and 112 while increasing the distances of the movable electrode 32 from the fixed electrodes 12 and 111.

The movable electrode 32 cooperates with the fixed electrodes 11 and 12 to form capacitance elements C11 and C12, and cooperates with the fixed electrodes 111 and 112 to form capacitance elements C111 and C112, as shown in FIG. 8. Thus, the capacitance values of the capacitance elements C11 and C112 increase and the capacitance values of the capacitance elements C12 and C111 decrease.

FIG. 8 shows a construction of a tension calculating circuit 150 for calculating a tension. The tension calculating circuit 150 includes the capacitance elements C11, C12, C111, and C112; and C/V converters 80 and 81; and a subtracter 82.

In the tension calculating circuit 150, the C/V converter 80 outputs a voltage corresponding to the sum of the capacitance values of the capacitance elements C11 and C112, and the C/V converter 81 outputs a voltage corresponding to the sum of the capacitance values of the capacitance elements C12 and C111. The subtracter 82 outputs a voltage corresponding to the difference between the voltage output from the C/V converter 80 and the voltage output from the C/V converter 81. Therefore, by detecting the output voltage, the force received by the force receiving portion 70 from the fiber A can be measured.

As described above, in the tension measuring apparatus 100 of this embodiment, when the force receiving portion 70 receives a force from the fiber A, the movable electrode 32 is rotated around the rotational axis 33P to change the respective distances of the movable electrode 32 from the two fixed electrodes 11 and 12 and the two fixed electrodes 111 and 112 disposed on both sides of the movable electrode 32. The force received by the force receiving portion 70 from the fiber A can sensitively be measured on the basis of changes in the capacitance values of the capacitance elements C11, C12, C111, and C112 formed between the movable electrode 32 and the respective fixed electrodes 11, 12, 111, and 112.

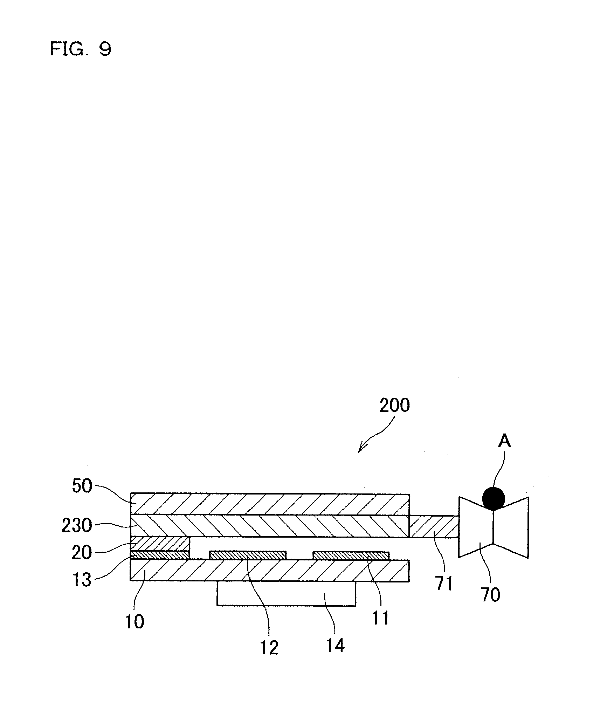

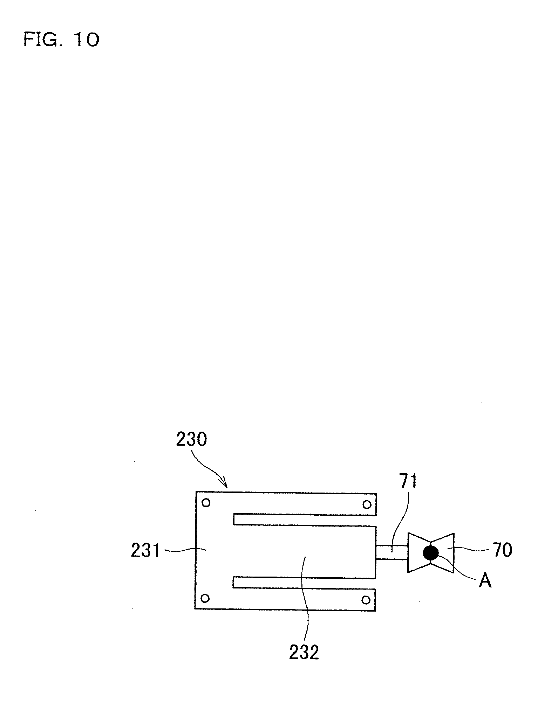

Next, a tension measuring apparatus 200 according to a third embodiment of the present invention will be described with reference to FIGS. 9 and 10. FIG. 9 is a sectional view of a tension measuring apparatus according to the third embodiment of the present invention. FIG. 10 is a plan view of a plate member included in the tension measuring apparatus of FIG. 9.

The tension measuring apparatus 200 of this embodiment differs from the tension measuring apparatus 4 of the first embodiment on the following point. While the movable electrode 32 rotates around the rotational axis 33P in the tension measuring apparatus 4, a movable electrode 232 is displaced by bending with its one end portion serving as a fulcrum. The other features of the construction of the tension measuring apparatus 200 are the same as those of the tension measuring apparatus 4. Therefore, the same components of the tension measuring apparatus 200 as those of the tension measuring apparatus 4 are denoted by the same reference numerals as of the tension measuring apparatus 4, respectively, and the description thereof will be omitted.

As shown in FIG. 9, the tension measuring apparatus 200 includes a substrate 10, two fixed electrodes 11 and 12, an electrode 13, a spacer 20, a plate member 230, a cover layer 50, and a force receiving portion 70. Circuit components 14 are disposed on the other face of the substrate 10.

As shown in FIG. 10, the plate member 230 is made up of a fixed portion 231 and a movable electrode 232. The fixed portion 231 is substantially U-shaped, inside of which there is disposed the movable electrode 232 connected at its one end to the fixed portion 231.

When a fiber A is pressed onto the force receiving portion 70, the force receiving portion 70 receives a downward force from the fiber A, and thereby the movable electrode 232 is bent with its one end, that is, the left end in FIG. 9, serving as a fulcrum. The movable electrode 232 is thus displaced to get near to the fixed electrodes 11 and 12. This decreases the distances of the movable electrode 232 from the respective fixed electrodes 11 and 12. At this time, the distance between the fixed electrode 11 and the movable electrode 232 is decreased more than the distance between the fixed electrode 12 and the movable electrode 232. Thus, this increases the capacitance values of the capacitance elements constituted by the movable electrode 232 and the respective fixed electrodes 11 and 12, and the capacitance value of the capacitance element constituted by the fixed electrode 11 and the movable electrode 232 is increased more than the capacitance value of the capacitance element constituted by the fixed electrode 12 and the movable electrode 232.

When the force receiving portion 70 is released from the force of the fiber A, the movable electrode 232 is displaced with its one end, that is, the left end in FIG. 9, serving as a fulcrum, so as to get away from the fixed electrodes 11 and 12. This increases the distances of the movable electrode 232 from the respective fixed electrodes 11 and 12. This decreases the capacitance values of the capacitance elements constituted by the movable electrode 232 and the respective fixed electrodes 11 and 12.

In the tension measuring apparatus 200 of this embodiment, no spacer is disposed on the plate member 230, and the cover layer 50 is disposed directly on the plate member 230. Therefore, when the force receiving portion 70 is released from the force of the fiber A, the movable electrode 232 is stopped by the cover layer 50 and thereby returns to its original position at which the fiber A is not pressed onto the force receiving portion 70. This always realizes accurate tension measurement.

As described above, in the tension measuring apparatus 200 of this embodiment, when the force receiving portion 70 receives a force from the fiber A, the movable electrode 232 is bent with its one end, that is, the left end in FIG. 9, serving as a fulcrum. This changes the distances of the movable electrode 232 from the respective fixed electrodes 11 and 12. The force received by the force receiving portion 70 from the fiber A can be measured on the basis of changes in the capacitance values of the capacitance elements formed between the movable electrode 232 and the respective fixed electrodes 11 and 12.

In the above-described first to third embodiments, two fixed electrodes are disposed on the substrate. However, the number of fixed electrodes is not limited. It is only necessary to dispose electrodes so that the distances between electrodes change due to an externally applied force to change the capacitance values of the capacitance elements constituted by the electrodes. In a modification, therefore, three or more fixed electrodes may be disposed on the substrate.

While this invention has been described in conjunction with the specific embodiments outlined above, it is evident that many alternatives, modifications and variations will be apparent to those skilled in the art. Accordingly, the preferred embodiments of the invention as set forth above are intended to be illustrative, not limiting. Various changes may be made without departing from the spirit and scope of the invention as defined in the following claims.

## Claims

1. A tension measuring apparatus comprising:
a plurality of fixed electrodes (11, 12; 11, 12, 111, 112) arranged in one direction on one plane so as to be distant from each other;
a movable electrode (32; 232) that cooperates with the plurality of fixed electrodes to form capacitance elements, the movable electrode being displaceable in at least one of the direction of getting near to the plane and the direction of getting away from the plane; and
a force receiving portion (70) that receives an externally applied force and thereby displaces the movable electrode so as to change the distances of the movable electrode from the respective fixed electrodes constituting the capacitance elements,
the magnitude of the force applied to the force receiving portion being measured on the basis of changes in the capacitance values of the capacitance elements.

2. The apparatus according to claim 1, wherein the apparatus comprises two fixed electrodes (11, 12), and
the force applied to the force receiving portion causes an increase in the capacitance value of one of two capacitance elements constituted by the two fixed electrodes and the movable electrode (32), and a decrease in the capacitance value of the other capacitance element.

3. The apparatus according to claim 2, wherein the force receiving portion (70) is disposed outside the two fixed electrodes (11, 12) in the one direction, and
the movable electrode (32) is rotatable around a rotational axis (33P) extending parallel to the plane at a position corresponding to a position between the two fixed electrodes.

4. The apparatus according to claim 1, wherein the apparatus comprises two fixed electrodes (11, 12),
the force receiving portion is disposed outside the two fixed electrodes in the one direction, and
the movable electrode (232) is displaceable with its one end serving as a fulcrum in only one of the direction of getting near to the plane and the direction of getting away from the plane.

5. A tension measuring apparatus comprising:
a plurality of first fixed electrodes (11, 12) arranged in one direction on a first plane so as to be distant from each other;
a plurality of second fixed electrodes (111, 112) arranged in the one direction on a second plane facing the first plane so as to be distant from each other;
a movable electrode (32) that cooperates with the plurality of first fixed electrodes and the plurality of second fixed electrodes to form capacitance elements, the movable electrode being displaceable in at least one of the direction of getting near to the first plane and the direction of getting away from the first plane; and
a force receiving portion (70) that receives an externally applied force and thereby displaces the movable electrode so as to change the distances of the movable electrode from the respective first and second fixed electrodes constituting the capacitance elements,
the magnitude of the force applied to the force receiving portion being measured on the basis of changes in the capacitance values of the capacitance elements.

6. The apparatus according to claim 5, wherein the apparatus comprises two first fixed electrodes (11, 12) and two second fixed electrodes (111, 112) facing the respective first fixed electrodes, and
the force applied to the force receiving portion (70) causes an increase in the capacitance value of one of two capacitance elements constituted by the two first fixed electrodes and the movable electrode, and a decrease in the capacitance value of the other capacitance element, and causes an increase in the capacitance value of one of two capacitance elements constituted by the two second fixed electrodes and the movable electrode, and a decrease in the capacitance value of the other capacitance element.

7. The apparatus according to claim 6, wherein the force receiving portion (70) is disposed outside the two first fixed electrodes (11, 12) in the one direction, and
the movable electrode (32) is rotatable around a rotational axis (33P) extending parallel to the first plane at a position corresponding to a position between the two first fixed electrodes (11, 12) and at a position corresponding to a position between the two second fixed electrodes (111, 112).
